Europäisches Patentamt

European Patent Office

Office européen des brevets

(19)

(11) **EP 0 901 300 A1**

(12) **EUROPÄISCHE PATENTANMELDUNG**

(43) Veröffentlichungstag:
  **10.03.1999 Patentblatt 1999/10**

(51) Int. Cl.⁶: **H04Q 11/04**

(21) Anmeldenummer: **97115554.4**

(22) Anmeldetag: **08.09.1997**

(84) Benannte Vertragsstaaten:
  **AT BE CH DE DK ES FI FR GB GR IE IT LI LU MC NL PT SE**
  Benannte Erstreckungsstaaten:
  **AL LT LV RO SI**

(71) Anmelder:
  **SIEMENS AKTIENGESELLSCHAFT**
  **80333 München (DE)**

(72) Erfinder:
  **Von Der Straten, Gernot, Dr.**
  **82327 Tutzing (DE)**

(54) **Verfahren und Anordnung zum automatischen Konfigurieren einer Teilnehmereinrichtung mit Netzschnittstelleneinheiten**

(57) Verfahren und Anordnung zum automatischen Konfigurieren einer Teilnehmereinrichtung (En) mit Netzschnittstelleneinheit (NIU) zum Anpassen an eine Anschlußeinheit(AFRA-NT) eines Digitalnetzes (AN), wobei die Datenrate dieser Netzschnittstelleneinheit (NIU) adaptiv einstellbar ist. Ein solches Verfahren hat die Schritte:

Erfassen der maximalen Datenrate zwischen Netzschnittstelleneinheit bzw. Anschlußeinheit und einer anderen Einheit des Digitalnetzes (AN);
Vergleichen der erfaßten Datenrate mit einem in der Teilnehmereinrichtung (En) gespeicherten Wert einer vorhergehenden maximalen Datenrate;

Speichern der erfaßten Datenrate in der Teilnehmereinrichtung (En);
Vergleichen der erfaßten Datenrate mit dem Datenratenbedarf derzeit bestehender Verbindungen von Endgeräteapplikationen der Teilnehmereinrichtung (En); und
Konfigurieren der erfaßten maximalen Datenrate als maximal zulässige Datenrate der Netzschnittstelleneinheit (NIU), falls der Datenratenbedarf derzeit bestehender Verbindungen die erfaßte maximale Datenrate nicht überschreitet

## FIG 1

**Beschreibung**

Die Erfindung betrifft ein Verfahren zum Konfigurieren einer Teilnehmereinrichtung mit einer Netzschnittstelleneinheit zum Anpassen der Teilnehmereinrichtung an eine Anschlußeinheit eines Digitalnetzes, wenn die Datenrate der Anschlußeinheit abhängig von den tatsächlichen Übertragungsbedingungen adaptiv einstellbar ist.

Moderne Telekommunikationsnetze verfügen im Teilnehmeranschlußbereich über digitale Anschlußleitungsnetze, die eine oder mehrere Ortsvermittlungsstellen mit Hilfe von Anschlußeinheiten über Teilnehmeranschlußleitungen mit Teilnehmereinrichtungen verbinden. Solche Teilnehmereinrichtungen sind aus der Sicht des Anschlußleitungsnetzes Teilnehmerendeinrichtungen, können jedoch teilnehmerseitig beispielsweise wie eine Vermittlungsanlage oder ein Multiplexer, jeweils mit mehreren unterschiedlichen Endgeräten oder Endgeräteapplikationen realisiert sein. Solche Endgeräteanwendungen können beispielsweise Audiotelefonie, Bildtelefonie, Datennetzanwendungen oder Internetanwendungen sein. Es kann sich beispielsweise auch um eine sogenannte SET-TOP-BOX zum Umsetzen digitaler Bild- und Toninformation handeln, die entweder unmittelbar oder über eine Vermittlungseinrichtung an ein Anschlußleitungsnetz angeschlossen sein kann. Zwischen Teilnehmereinrichtung und Anschlußleitungsnetz können bedarfsweise sowohl Vermittlungsdaten als auch Paketdaten übermittelt werden. Der Übertragungsbandbreitebedarf, also die zu übertragende Bitrate zwischen der zugeordneten Anschlußeinheit des Anschlußleitungsnetzes und der Netzschnittstelleneinheit der Teilnehmereinrichtung hängt hierbei vom Bandbreitenbedarf der aktuell aktiven Endgeräteanwendungen ab, insbesondere von der Art dieser Anwendungen und der Anzahl der gleichzeitig aktiven Anwendungen.

Anschlußleitungsnetze wurden ursprünglich zur Übertragung niederfrequenter Informationssignale wie beispielsweise beim analogen Fernsprechen oder bei der Verwendung von Schmalbanddiensten konzipiert. Die im Anschlußleitungsnetz auf der Teilnehmerseite übertragene Bitrate ist hierbei beispielsweise für Schmalband-ISDN 2 x 64 kBit/s für 2 B-Kanäle (Nutzkanäle)zuzüglich 16 kBit/s für einen D-Kanal (Steuerkanal) derart festgelegt, daß die längsten vorkommenden Anschlußleitungen noch genutzt werden können. Damit bleibt aber ein großer Teil der maximal zuverlässig übertragbaren Bitrate, d.h. der maximalen Bandbreite im Anschlußleitungsnetzbereich mit kürzeren Anschlußleitungen ungenutzt. Das die Reichweite der Digitalsignalübertragung begrenzende Dämpfungsmaß für symmetrische Doppeladern von Kupferanschlußleitungen nimmt nämlich mit der Leitungslänge zu. Generell gilt, je kürzer die Länge einer Teilnehmeranschlußleitung um so höher kann die darüber zu übertragende Bitrate sein. Für Schmalbanddienste konzipierte Anschlußleitungsnetz eignen sich folglich auch für die Übertragung breitbandigerer Dienste. So haben sich in den letzten Jahren Verfahren durchgesetzt, mit denen die vorhandenen Kupferleitungen im Anschlußleitungsnetz für die Übertragung von digitalen Informationssignalen genutzt werden können. Hierzu zählen beispielsweise das sogenannte ADSL- Verfahren (vom englischsprachigen Ausdruck "Asymmetrical Digital Subscriber Line" für "assymetrische digitale Teilnehmeranschlußleitung") und das sogenannte HDSL-Verfahren (vom englischsprachigen Ausdruck "High bit rate Digital Subscriber Line" für "digitale Teilnehmeranschlußleitung für hohe Bitrate").

Die DE 43 43 982 beschreibt ein Anschlußleitungsnetz mit Teilnehmeranschlußleitungen zur Übertragung von digitalen Informationssignalen, in dem von einer Ortsvermittlungsstelle Bitmuster über eine Teilnehmeranschlußleitung gesandt werden und die beim Teilnehmer gespiegelt und wieder zurückgesandten Bitmuster ausgewertet werden, um die maximal mögliche Bitrate pro Übertragungsleitung festzulegen. In der Vermittlungsstelle erfolgt dann die Auswertung der erhaltenen Bitmuster. In Abhängigkeit der Ergebnisse wird dann die maximal mögliche Bitrate festgelegt.

Aus der zum Prioritätstag der vorliegenden Anmeldung noch nicht veröffentlichten Patentanmeldung DE 196 25 385 ist ein Verfahren zum Übertragen von Informationssignalen in einem Anschlußleitungsnetz über Teilnehmeranschlußleitungen bekannt, bei dem Übertragungsparameter der Teilnehmeranschlußleitung gemessen werden und nach Maßgabe der Meßergebnisse Einstellungen vermittlungsseitiger und teilnehmerseitiger Parameter vorgenommen werden. Diese Parameter sind beispielsweise die maximal sicher übertragbare Bitrate und gegebenenfalls das Übertragungsverfahren. Dadurch können Bitrate und Übertragungsverfahren leitungsindividuell in Abhängigkeit von den physikalischen Übertragungsparametern adaptiv angepasst werden. Dadurch wird es möglich, zusätzlich zu einem D-Kanal mit einer Bandbreite von 16 kBit/s noch mehrere Nutzkanäle jeweils mit einer Bandbreite von 64 kBit/s zu Übertragen. Die maximal übertragbare Anzahl der Nutzkanäle hängt hierbei von der Bandbreite der individuellen Teilnehmeranschlußkonfiguration ab, insbesondere von der Länge der Teilnehmeranschlußleitung.

Als Verfahren zur teilnehmerseitigen Informationsübertragung in solchen Anschlußleitungsnetzen ist aus dem Artikel von M.N. Huber und P.J. Kühn, Modelling of a Multi-Queue Polling System with Arbitrary Server Interrupts for the Idle-Slot-Concatenation Packet Switching Principle in a Hybrid CS/PS Node; Proceedings of the 12th International Teletraffic Congress, Torino, 1988 bekannt, einen Informationstransportrahmen vorzusehen, der in gleich große Zeitschlitze aufgeteilt ist. Jeder dieser Zeitschlitze wird entweder mit Vermittlungssystem-Daten (CS-Daten vom englischsprachigen Ausdruck Circuit Switching) oder mit Paketdaten (PS-Daten vom englischsprachigen Ausdruck Packet Switching) belegt, wobei alle nicht mit Vermittlungssystem-Daten belegten Zeitschlitze zu einem verbleibenden Paketdaten-Transportkanal zusammengefaßt werden (Idle Slot Concatenation). Der Verkehrstyp, von dem der verbleibenden Paketdaten-Transportkanal belegt wird, z.B. ATM oder LAN/Ethernet, ist durch die Anschlußkonfiguration, insbesondere durch das von der teilnehmerseitigen Protokollauswerteeinrichtung bearbeitbare Paketdaten-Protokoll festgelegt.

In einer zum Anmeldetag/Prioritätstag dieser Anmeldung nicht veröffentlichten deutschen Patentanmeldung 197 16 429 wird ein Verfahren zur teilnehmerseitigen Informationsübertragung in einem Anschlußleitungsnetz mit Hilfe eines in gleich große Zeitschlitze aufgeteilten Informationstransportrahmens beschrieben, wobei mindestens ein Teil dieser Zeitschlitze Nutzkanal-Zeitschlitze sind, von denen jeder entweder mit Vermittlungssystem-Daten oder mit Paketdaten belegt wird und alle nicht mit Vermittlungssystem-Daten belegten Nutzkanal-Zeitschlitze zu einem verbleibenden Paketdaten-Transportkanal zusammengefaßt werden. In jeden Zeitschlitz des verbleibenden Paketdaten-Transportkanals wird ein Protokolldiskriminator eingefügt, der ein eindeutiges Zuordnen der in einem Zeitschlitz des verbleibenden Paketdaten-Transportkanals enthaltenen Daten zu einem Verkehrstyp ermöglicht, so daß empfangsseitig jeweils eine verkehrstypspezifische Protokollauswertung vorgenommen werden kann. Dies ermöglicht die Nutzung des verbleibenden Paketdaten-Transportkanals, der nachfolgend auch ISC-Kanal (vom englischsprachigen Ausdruck Idle Slot Concatenation) genannt wird, durch unterschiedliche Verkehrstypen, wie zum Beispiel ATM und LAN. Gegebenenfalls kann bei Nachrichten variabler Länge zusätzlich eine pro Nachricht eingefügte Längenangabe übermittelt werden. Eine andere Variante eines solchen Verfahrens sieht zur Übertragung von Nachrichten variabler Länge vor, im verbleibenden Paketdaten-Transportkanal zwischen zwei Nachrichten jeweils einen Zeitschlitz des verbleibenden Paketdaten-Transportkanals nicht zu belegen.

Ein solches Verfahrens zur teilnehmerseitigen Informationsübertragung kann auch vorsehen, daß ein Zeitschlitz des Informationstransportrahmens zur Rahmensteuerung verwendet wird und ein Zeitschlitz zur ISDN-Signalisierung, wobei dann diese zur Übertragung von Steuerinformation vorgesehenen Zeitschlitze vorzugsweise innerhalb des Informationstransportrahmens an fest definierten Stellen angeordnet sind.

Der Erfindung liegt die Aufgabe zugrunde, anzugeben, wie eine Teilnehmereinrichtung zur flexibleren Nutzung von Anschlußleitungsnetzen zu konfigurieren ist.

Diese Aufgabe löst die Erfindung durch ein Verfahren mit den Merkmalen des Anspruchs 1 und durch eine Teilnehmereinrichtung mit den Merkmalen des Anspruchs 10.

Ein erfindungsgemäßes Verfahren dient zum automatischen Konfigurieren einer Teilnehmereinrichtung, die eine Netzschnittstelleneinheit hat zum Anpassen der Teilnehmereinrichtung an eine Anschlußeinheit eines Digitalnetzes, wobei die Datenrate dieser Netzschnittstelleneinheit abhängig von den tatsächlichen Übertragungsbedingungen adaptiv einstellbar ist. Ein solches Verfahren hat die Verfahrensschritte:

Erfassen der aktuellen ,maximal möglichen Datenrate zwischen Netzschnittstelleneinheit und Anschlußeinheit bzw. einer anderen Einheit des Anschlußleitunsnetzes mit Hilfe eines Meldungsaustauschs zwischen Netzschnittstelleneinheit und Anschlußeinheit;
Vergleichen der erfaßten aktuellen, maximal möglichen Datenrate mit einem in der Teilnehmereinrichtung gespeicherten Wert einer vormals aktuellen, maximal möglichen Datenrate; Speichern der erfaßten aktuellen, maximal möglichen Datenrate in der Teilnehmereinrichtung, falls dieser Vergleich eine Abweichung ergibt;
Vergleichen der erfaßten aktuellen, maximal möglichen Datenrate mit dem Datenratenbedarf derzeit bestehender Verbindungen von Endgeräteapplikationen der Teilnehmereinrichtung; und
Konfigurieren der erfaßten aktuellen, maximal möglichen Datenrate als maximal zulässige Datenrate der Netzschnittstelleneinheit, falls der Datenratenbedarf derzeit bestehender Verbindungen die erfaßte aktuelle, maximal mögliche Datenrate nicht überschreitet.

Der Wert der vormals aktuellen, maximal möglichen Datenrate ist hierbei der Wert der beim Erfassen der aktuellen ,maximal möglichen Datenrate zwischen Netzschnittstelleneinheit bzw. Anschlußeinheit und der Vermittlungseinrichtung Ve bzw, einem Konzentrator im Anschlußleitungsnetz AN tatsächlich unterstützten Datenrate. Dieser Wert kann nach oben beschränkt sein durch einen administrativ eingestellten Grenzwert, falls beispielsweise der Teilnehmer vom Netzbetreiber eine geringere Datenrate bezieht, als technisch möglich wäre. Er kann aber auch durch technische Übertragungsparameter nach oben begrenzt sein. Falls die maximal mögliche Datenrate durch einen administrativ eingestellten Grenzwert begrenzt ist, kann selbstverständlich eine zu unterstützende maximale Datenrate diesen Grenzwert unabhängig von den physikalischen Bedingungen nicht überschreiten.

Das beschriebene erfindungsgemäße Verfahren überläßt es höheren Schichten, z.B. der Anwendungsschicht, bestehende Verbindungen auszulösen oder auch dann aufrechtzuerhalten, wenn die Übertragüngsqualität, z.B. durch temporäre Störungen, eingeschränkt ist und eigentlich eine Reduktion der Übertragungsbandbreite erfordern würde. Trotzdem ist sichergestellt, daß die Übertragungsqualität gewährleistet wird, wenn die Bandbreite bestehender Verbindungen die geringere erfaßte aktuelle, maximal mögliche Datenrate nicht mehr überschreitet.

Eine Weiterbildung eines solchen Verfahrens zum automatischen Konfigurieren einer Teilnehmereinrichtung sieht zusätzlich vor, daß der Datenratenbedarf derzeit bestehender Verbindungen geprüft wird, falls dieser Datenratenbedarf die erfaßte aktuelle maximal mögliche Datenrate überschreitet, und daß die erfaßte aktuelle maximal mögliche Datenrate als maximal zulässige Datenrate der Netzschnittstelleneinheit konfiguriert wird, wenn dieser Datenratenbedarf die erfaßte aktuelle maximal mögliche Datenrate nicht mehr überschreitet.

Dadurch wird sichergestellt, daß die erforderliche Übertragungsqualität gewährleistet wird, sobald die Bandbreite bestehender Verbindungen die geringere erfaßte aktuelle, maximal mögliche Datenrate nicht mehr überschreitet.

Eine besonders günstige Weiterbildung eines Verfahrens zum erfindungsgemäßen automatischen Konfigurieren einer Teilnehmereinrichtung enthält den zusätzlichen Verfahrensschritt, daß falls der Datenratenbedarf derzeit bestehender Verbindungen die erfaßte aktuelle maximal mögliche Datenrate überschreitet, eine Meldung an mindestens eine Endgeräteapplikationen der Teilnehmereinrichtung, für die derzeit bestehende Verbindungen aufgebaut sind, abgegeben wird, um darauf hinzuweisen, daß die Übertragüngsqualität nicht gewährleistet ist. In diesem Fall kann in der Anwendungsschicht oder einer höheren Schicht entschieden werden, ob die Verbindungen auch mit höherer Bitfehlerrate aufrechterhalten werden sollen, oder ob eine oder mehrere Verbindungen ausgelöst werden sollen.

In einer Weiterbildung eines erfindungsgemäßen Verfahrens wird, falls die erfaßte aktuelle maximal mögliche Datenrate als maximal zulässige Datenrate der Netzschnittstelleneinheit konfiguriert wird, eine Meldung mit der neuen maximal zulässige Datenrate der Netzschnittstelleneinheit an die Anschlußeinheit abgegeben. Dadurch liegt die in der Teilnehmereinrichtung aktuell eingestellte maximal zulässige Datenrate der Netzschnittstelleneinheit auch in der Anschlußeinheit vor und kann entsprechend unterstützt werden.

Eine andere günstige Weiterbildung eines erfindungsgemäßen Verfahrens zum automatischen Konfigurieren einer Teilnehmereinrichtung enthält den zusätzlichen Verfahrensschritt, die erfaßte aktuelle, maximal mögliche Datenrate mit einem in der Teilnehmereinrichtung gespeicherten Wert der von der Anschlußeinheit unterstützten maximalen Datenrate zu vergleichen und den Wert der erfaßten aktuellen, maximal möglichen Datenrate durch den Wert der vom Anschlußleitungsnetz AN unterstützten maximalen Datenrate zu ersetzen, falls dieser kleiner ist als der Wert der erfaßten aktuellen, maximal möglichen Datenrate. Diese Ausgestaltungsform eines erfindungsgemäßen Verfahrens berücksichtigt unter anderem den Fall, daß die physikalischen Voraussetzungen eine höhere Datenrate erlauben würden, als von der Anschlußeinheit eines Netzbetreibers unterstützt wird. Hierbei ist es unerheblich, ob die Beschränkung der maximal unterstützten Datenrate technisch oder administrativ bedingt ist. Eine technisch bedingte Beschränkung kann in einem solchen Fall zum Beispiel die Beschränkung auf einen Anschluß gemäß PCM30-Standard und somit auf 30 Kanäle mit jeweils 64 kBit Übertragungsrate bzw. auf ca. 2 MHz Bandbreite sein. Eine administrative Beschränkung kann bei installiertem Anschluß gemäß PCM30-Standard dadurch bedingt sein, daß der Teilnehmer nur einen oder einige Anschlüsse, jeweils mit beispielsweise zwei Nutzkanälen von je 64 kBit Datenrate und einem D-Kanal von 16 kBit Datenrate gemietet hat und daher der Netzbetreiber im Anschlußleitungsnetz auch nur die entsprechend eingeschränkte Datenrate unterstützt.

Eine Möglichkeit, in einem erfindungsgemäßen Verfahren die aktuelle ,maximal mögliche Datenrate zwischen Netzschnittstelleneinheit und Anschlußeinheit zu erfassen ist, die Übertragungseigenschaften zwischen Netzschnittstelleneinheit bzw. Anschlußeinheit und dem Anschlußleitungsnetz Ve, AN mit Hilfe eines Informationsaustauschs zwischen diesen Einheiten anhand der Fehlerrate zu messen. Daraufhin kann dann die Anschlußeinheit in Form einer Meldung, z.B. Capacity_Modification_Request, die aktuell gemessene maximale Übertragungsrate als Parameter zur Netzschnittstelleneinheit übermitteln.

Das Erfassen der aktuellen ,maximal möglichen Datenrate zwischen Netzschnittstelleneinheit und Anschlußeinheit kann bei einem erfindungsgemäßen Verfahren zum automatischen Konfigurieren einer Teilnehmereinrichtung beispielsweise durch das Übermitteln einer Anfragemeldung wie Max_Capacity_Request von der Netzschnittstelleneinheit zur Anschlußeinheit veranlaßt werden. Daraufhin kann dann die Anschlußeinheit, eventuell unter Einbeziehen der Netzschnittstelleneinheit, ein Verfahren zum Ermitteln der aktuellen ,maximal möglichen Datenrate ausführen. Das Ergebnis kann dann der Netzschnittstelleneinheit übermittelt werden und somit in dieser erfaßt werden. Demnach ist in einer derartigen Ausgestaltungsform eines erfindungsgemäßen Verfahrens die Anschlußeinheit für das ermitteln der maximal möglichen Datenrate zuständig, sodaß die entsprechende Prozeßsteuerung für alle an eine Anschlußeinheit angeschlossenen Netzschnittstelleneinheiten verwendet werden kann. Trotzdem kann jede Netzschnittstelleneinheit, beispielsweise abhängig von den gerade vorgesehenen oder den üblichen Anwendungen, festlegen, wann die maximal mögliche Datenrate aktualisiert werden soll.

Wenn zwischen Netzschnittstelleneinheit und Anschlußeinheit ein Übertragungssystem mit mehreren Nutzkanälen vorgesehen ist, entsprechen in einer Ausgestaltungsform eines erfindungsgemäßen Verfahrens die Werte der Datenraten jeweils einem Vielfachen der Datenrate eines solchen Nutzkanals.

Als Anordnung zur Realisierung eines erfindungsgemäßen Verfahrens ist eine Teilnehmereinrichtung vorgesehen mit Datenverarbeitungssystem einschließlich einer Verarbeitungseinheit, einer Speichereinheit und einem Systembus, um eine Endgeräteapplikation zu realisieren, und mit einer Netzschnittstelleneinheit (NIU) zum Anpassen des Systembusses an eine Anschlußeinheit (AFRA) eines Digitalnetzes, deren Datenrate abhängig von den tatsächlichen Übertragungsbedingungen adaptiv einstellbar ist. Die Teilnehmereinrichtung hat Mittel zum Erfassen der aktuellen, maximal möglichen Datenrate zwischen Netzschnittstelleneinheit und Digitalnetzanschlußeinheit, Mittel zum Speichern eines Wertes der maximal möglichen Datenrate, Mittel zum Vergleichen des gespeicherten Wertes der maximal möglichen Datenrate mit dem Wert der erfaßten aktuellen, maximal möglichen Datenrate, Mittel zum Konfigurieren einer maximal zulässigen Datenrate der Netzschnittstelleneinheit und Mittel zum Abweisen eines Verbindungsaufbauwunsches der Endgeräteapplikation, falls der Datenratenbedarf dieser aufzubauenden Verbindung die maximal zulässige Datenrate überschreitet.

Mittel zum Speichern eines Wertes der maximal möglichen Datenrate ist hierbei vorzugsweise eine Halbleiterspeicheranordnung, es kann aber auch eine Speichereinrichtung mit magnetischem Aufzeichnungsträger oder mit optischem Speichermedium sein. Die Mittel zum Vergleichen des gespeicherten Wertes der maximal möglichen Datenrate mit dem Wert der erfaßten aktuellen, maximal möglichen Datenrate, die Mittel zum Konfigurieren einer maximal zulässigen Datenrate der Netzschnittstelleneinheit und die Mittel zum Abweisen eines Verbindungsaufbauwunsches der Endgeräteapplikation sind vorzugsweise durch eine Prozessoranordnung mit entspechenden Programmprozeduren realisiert.

Ein erfindungsgemäßes Verfahren sowie eine erfindungsgemäße Anordnung ermöglichen es Applikationen in einer Teilnehmereinrichtung, d.h. einem Endsystem wie zum Beispiel einem Personal Computer, einer Set Top Box oder einer Workstation, ein Verfahren zur adaptiven Einstellung der Datenrate auf einer Zweidrahtleitung durch ein Kommunikationsprotokoll zwischen einer Netzschnittstelleneinheit (Network Interface Unit NIU) der Teilnehmereinrichtung und einer Anschlußeinheit eines Digitalnetzes optimal zu nutzen, ohne daß davon die zugeordnete Vermittlungsstelle des Digitalnetzes betroffen ist. Anschlußeinheit und zugeordnete Vermittlungsstelle des Digitalnetzes können hierbei beispielsweise zu einem Anschlußleitungsnetz des Digitalnetzes gehören.

Nachfolgend wird die Erfindung unter Bezugnahme auf die Figuren an Hand eines Ausführungsbeispiels erläutert.

Figur 1 zeigt in schematischer Blockdarstellung ein Ausführungsbeispiel einer Teilnehmereinheit, angeschlossen an ein Anschlußleitungsnetz;

Figur 2 zeigt in schematischer Blockdarstellung ein Ausführungsbeispiel einer Teilnehmereinheit, getrennt nach Hardware und Software;

Figur 3 zeigt ein Flußdiagramm eines beispielhaften Informationsflusses zwischen einer Netzschnittstelleneinheit einer Teilnehmereinheit und einer Anschlußeinheit eines Anschlußleitungsnetzes; und

Figur 4 zeigt ein Flußdiagramm eines beispielhaften Informationsflusses zwischen einer Applikation einer Teilnehmereinheit, einer Netzschnittstelleneinheit einer Teilnehmereinheit und einer Anschlußeinheit eines Anschlußleitungsnetzes.

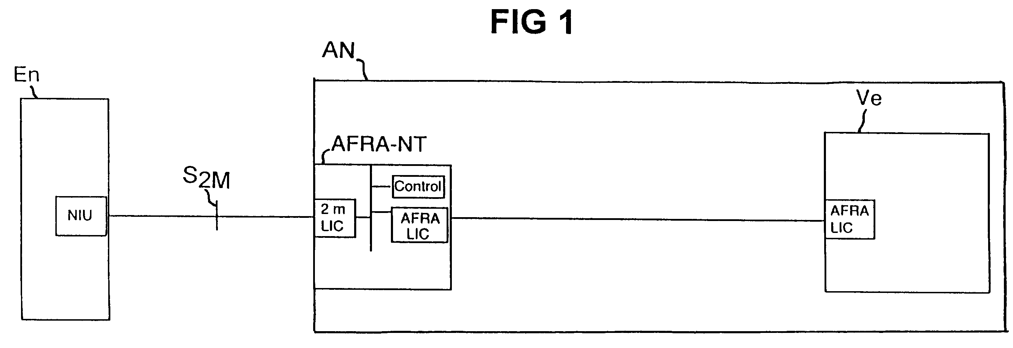

Figur 1 zeigt in schematischer Blockdarstellung eine Teilnehmereinrichtung En mit einer Netzschnittstelleneinheit NIU. Außerdem zeigt Figur 1 ein Anschlußleitungsnetz AN mit einer Anschlußeinheit AFRA-NT und einer Vemittlungsstelle Ve, die über eine Übertragungsstrecke miteinander verbunden sind. Im Ausführungsbeispiel gemäß Figur 1 übernimmt die Netzschnittstelleneinheit NIU der Teilnehmereinrichtung En die Kommunikation mit der Anschlußeinheit AFRA-NT des Anschlußleitungsnetzes AN einerseits und mit nicht dargestellten Applikationen wie z.B. einer Videokonferenzapplikation in der Teilnehmereinrichtung En anderseits.

Das in Figur 1 gezeigte Ausführungsbeispiel geht davon aus, daß zwischen der Anschlußeinheit AFRA-NT und der Netzschnittstelleneinheit NIU der Teilnehmereinrichtung En eine Schnittstelle $S_{2M}$ mit einer Bandbreite von 2 Mbit/s eingesetzt wird. Hierzu enthält die Anschlußeinheit AFRA-NT eine Schnittstelleneinheit 2mLIC. In diesem Fall kann die Hardware der Netzschnittstelleneinheit NIU und der Schnittstelleneinheit 2mLIC der einer ISDN-Schnittstellenkarte mit einer Bandbreite von 2 Mbit/s, also einem Primäranschluß (Primary Access) entsprechen. Zwischen der Netzschnittstelleneinheit NIU und der Anschlußeinheit AFRA-NT wird einer der 64 kbit/s Kanäle des Primäranschlusses zur Kommunikation für Steuer- und Messverfahren verwendet. Dieser Kanal entspricht ggf. einem für Steuerzwecke vorgesehenen Kanal zwischen der Anschlußeinheit AFRA-NT und einer Teilnehmerleitungsschnittstelle AFRA-LIC (Line Interface Card) einer Vermittlungsstelle Ve des Anschlußleitungsnetzes AN.

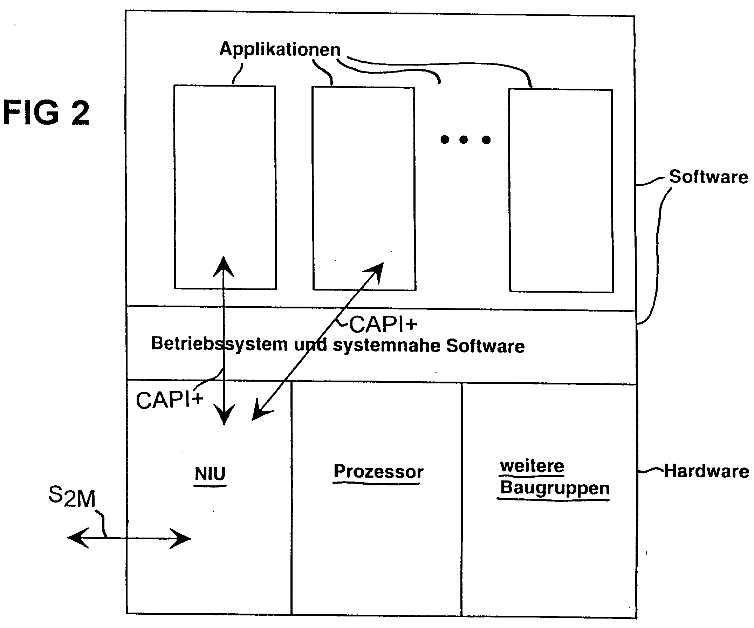

Die Netzschnittstelleneinheit NIU muß sich an den nicht im einzelnen dargestellten Systembus der Teilnehmereinrichtung En anpassen, z.B. eine EISA oder PCIBus-Schnittstelle. Die Schnittstelle zwischen der Netzschnittstelleneinheit NIU und in Figur 2 dargestellten Applikationen im Endsystem kann beispielsweise einer erweiterten CAPI-Schnittstelle CAPI+ entsprechen.

Bei dem Ausführungsbeispiel wird davon ausgegangen, daß bei einem Teilnehmer eine Anschlußeinheit AFRA-NT eines Anschlußleitungsnetzes AN installiert ist, die mit einer Vermittlung Ve des Anschlußleitungsnetzes AN verbunden und getestet ist.

Die Einmessung der Übertragungsstrecke hat im Ausführungsbeispiel eine maximale Anzahl $n_{max}$ B-Kanäle mit

$$2 \leq n_{max} \leq 30$$

ergeben. Hierbei ist $n_{max}$ die Anzahl der B-Kanäle, die maximal auf der Leitung zwischen einer Anschlußleitungsschnittstelle AFRA-LIC der Anschlußeinheit AFRA-NT und einer Anschlußleitungsschnittstelle AFRA-LIC einer Vermittlung Ve des Anschlußleitungsnetzes AN mit einer vorgegebenen maximalen Bitfehlerrate übertragbar sind.

Der Teilnehmer hat für seinen Anschluß die Anzahl $n_{admin}$ B-Kanäle von Betreiber gekauft mit

$$2 \leq n_{admin} \leq n_{max} .$$

Der Teilnehmer kann also zu einem Zeitpunkt höchstens die Anzahl $n_{admin}$ B-Kanäle belegen. Der obere Grenzwert $n_{max}$ ist als Begrenzung für $n_{admin}$ in den Teilnehmerdaten der Vermittlung Ve eingetragen.

Der Teilnehmer kann weniger als $n_{admin}$ Kanäle nutzen, falls sich die Übertragungseigenschaften auf der Teilnehmerleitung, und zwar zwischen der Anschlußleitungsschnittstelle AFRA-LIC der Vermittlung Ve des Anschlußleitungsnetzes AN und der Teilnehmereinrichtung En ggf. auch nur vorübergehend so verschlechtern, daß für die aktuelle maximale Übertragungsrate $n_{akt}$ zwischen Anschlußleitungsnetz AN und der Teilnehmereinrichtung En gilt: $n_{akt} \leq n_{admin}$. Dabei ist $n_{akt}$ in diesem Ausführungsbeispiel die Anzahl der B-Kanäle, die aufgrund einer aktuellen Messung der Bitfehlerrate übertragen werden können. Auch für die Anzahl $n_{akt}$, gilt $2 \leq n_{akt} \leq n_{max}$.

Die Anzahl der durch alle Applikationen in der Teilnehmereinrichtung En zu einem Zeitpunkt genutzten B-Kanäle wird im Zusammenhang mit dem Ausführungsbeispiel mit $n_{nutz}$ bezeichnet, wobei für $n_{nutz}$ gilt:

$$0 \leq n_{nutz} \leq n_{admin}.$$

Die Anzahl der von einer Applikation, z.B. einer Videokonferenzapplikation, in der Teilnehmereinrichtung En genutzten B-Kanäle, wird im Zusammenhang mit dem Ausführungsbeispiel mit x bezeichnet, wobei für x gilt:

$$1 \leq x \leq n_{admin}.$$

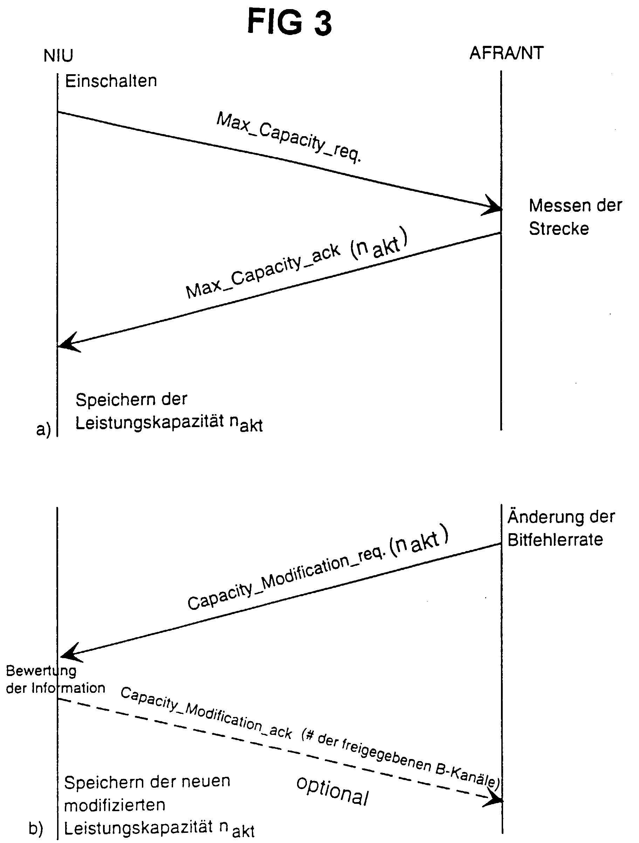

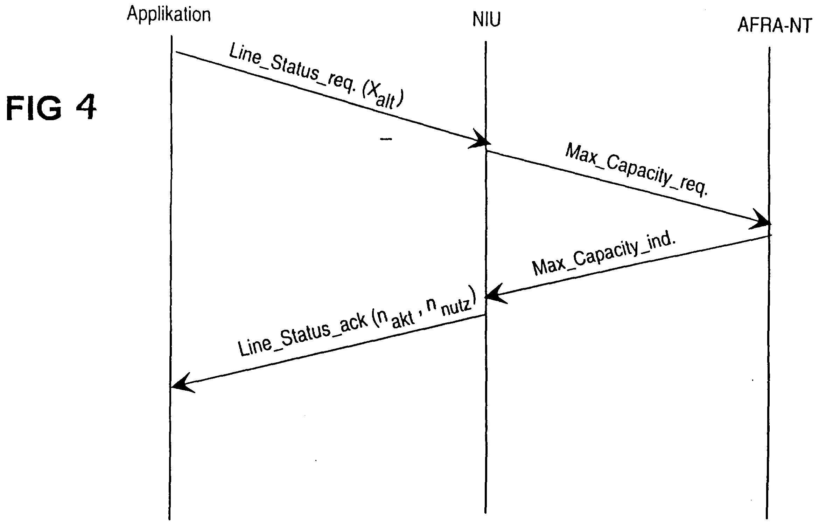

Nachstehend werden Verfahrensabläufe anhand der Figuren 3 und 4 in Form eines Ausführungsbeispiels erläutert:

Wird die Teilnehmereinrichtung En eingeschaltet (siehe Figur 3), so fordert die Netzschnittstelleneinheit NIU mittels der Nachricht Max_Capacity_requ von der Anschlußeinheit AFRA-NT die Zahl $n_{akt}$ der zur Zeit zur Verfügung stehenden B-Kanäle an (siehe Figur 3). Die Anschlußeinheit AFRA-NT und die Anschlußleitungsschnittstelle AFRA-LIC führen daraufhin die Messung der Übertragungsstrecke zwischen der Anschlußeinheit AFRA-NT und der Vermittlungsstelle Ve durch.

Die Anschlußeinheit AFRA-NT beantwortet die Anfrage mit Max_Capacity_ack, die $n_{akt}$ enthält.

Die Netzschnittstelleneinheit NIU speichert dann den Wert $n_{akt}$ und kann Verbindungsaufbauwünsche der Teilnehmereinrichtung En zurückweisen, falls dadurch der Wert $n_{akt}$ überschritten würde. Falls der Wert $n_{akt}$ größer als der Wert $n_{admin}$ sein sollte, weist die Vermittlungsstelle Ve Rufe zurück, die zu einem Überschreiten des Wertes $n_{admin}$ führen würden.

Im laufenden Betrieb stellen die Anschlußeinheit AFRA-NT und die Anschlußleitungsschnittstelle AFRA-LIC durch Routinemessungen der Leitung eine Veränderung der Übertragungseigenschaften fest. Daraufhin stellt die Anschlußeinheit AFRA-NT der Netzschnittstelleneinheit NIU die Meldung Capacity_Modification_requ (siehe Figur 3) zu, die als Parameter die Zahl $n_{akt}$ enthält. Falls der neue Wert $n_{akt}$ größer ist als der in der Netzschnittstelleneinheit NIU gespeicherte Wert, wird der neue Wert für $n_{akt}$ gespeichert und die Netzschnittstelleneinheit NIU antwortet mit Capacity_Modification_ack. Falls der neue Wert für $n_{akt}$ niedriger ist als der alte, prüft die Netzschnittstelleneinheit NIU auch, ob $n_{nutz} > n_{akt}$(neu) gilt.

Wenn das nicht der Fall ist, antwortet die Netzschnittstelleneinheit NIU mit Capacity_Modification_ack und teilt der Anschlußeinheit AFRA-NT die Nummern der freigegebenen B-Kanäle mit.

Daraufhin reduzieren die Anschlußeinheit AFRA-NT und die Anschlußleitungsschnittstelle AFRA-LIC in der Vermittlungsstelle Ve die Bitrate auf der Anschlußleitung entsprechend.

Falls der neue Wert für $n_{akt}$ kleiner ist als die Zahl $n_{nutz}$ der momentan genutzten B-Kanäle, beantwortet die Netzschnittstelleneinheit NIU die Nachricht Capacity_Modification_request nicht. Statt dessen kann sie Applikationen im Endsystem, sofern diese es zulassen, mittels einer Nachricht Capacity_Modification_Indication mitteilen, daß nicht mehr für alle Kanäle die Dienstgüte garantiert werden kann und die Zahl der B-Kanäle deshalb reduziert werden sollte (siehe auch Figur 4). Es liegt dann in der Verantwortung der Applikationen, angemessen auf diese Informationen zu reagieren.

Werden in diesem Zustand Verbindungen ausgelöst, so baut die Netzschnittstelleneinheit NIU bei Anforderung durch eine Applikation nur dann neue Verbindungen auf, falls $n_{akt}$, durch den neuen Verbindungsaufbau nicht überschritten wird.

Werden Applikationen im Endsystem von der Netzschnittstelleneinheit NIU entweder durch die Nachricht Capacity_Modification_Indication auf eine Reduktion der zur Verfügung stehenden Bitrate aufmerksam gemacht, oder erkennt eine Applikation aufgrund eigener Messungen eine Verschlechterung der Übertragungsstrecke, kann sie mit dem in Figur 4 schematisch dargestellten Verfahren die Zahl $n_{akt}$ und $n_{nutz}$ abfragen. Die Netzschnittstelleneinheit NIU teilt der Applikation in der Nachricht Line_Status_ack die Zahl der für sie aktuell zur Verfügung stehenden B-Kanäle mit. Wenn diese Applikation die Anzahl $x_{alt}$ B-Kanäle belegt, berechnet sich die Zahl $x_{neu}$ aus

$$x_{neu} = \max(n_{akt} - (n_{nutz} - x_{alt}), 0).$$

Die Applikation hat dann die Möglichkeit, von sich aus die bestehende Verbindung auszulösen und eine neue Verbindung mit ggf. weniger B-Kanälen aufzubauen.

Stellt die Applikation fest, daß sie mehr B-Kanäle benötigt als sie zur Zeit benutzt` veranlaßt sie einen Informationsfluß und Verfahrensablauf gemäß Figur 4.

**Patentansprüche**

1. Verfahren zum automatischen Konfigurieren einer Teilnehmereinrichtung (En) mit einer Netzschnittstelleneinheit (NIU) zum Anpassen der Teilnehmereinrichtung (En) an eine Anschlußeinheit (AFRA-NT) eines Digitalnetzes (AN), deren Datenrate abhängig von den tatsächlichen Übertragungsbedingungen im Digitalnetz (AN) adaptiv einstellbar ist, mit den Verfahrensschritten:

    Erfassen der aktuellen ,maximal möglichen Datenrate zwischen Netzschnittstelleneinheit (NIU) und Anschlußeinheit (AFRA-NT) mit Hilfe eines Meldungsaustauschs zwischen diesen Einheiten;
    Vergleichen der erfaßten aktuellen, maximal möglichen Datenrate mit einem in der Teilnehmereinrichtung (En) gespeicherten Wert einer vormals aktuellen, maximal möglichen Datenrate;
    Speichern der erfaßten aktuellen, maximal möglichen Datenrate in der Teilnehmereinrichtung, falls dieser Vergleich eine Abweichung ergibt;
    Vergleichen der erfaßten aktuellen, maximal möglichen Datenrate mit dem Datenratenbedarf derzeit bestehender Verbindungen von Endgeräteapplikationen der Teilnehmereinrichtung; und

    Konfigurieren der erfaßten aktuellen, maximal möglichen Datenrate als maximal zulässige Datenrate der Netzschnittstelleneinheit (NIU), falls der Datenratenbedarf derzeit bestehender Verbindungen die erfaßte aktuelle, maximal mögliche Datenrate nicht überschreitet.

2. Verfahren zum automatischen Konfigurieren einer Teilnehmereinrichtung (En) nach Anspruch 1, gekennzeichnet durch die zusätzlichen Verfahrensschritte:

    falls der Datenratenbedarf derzeit bestehender Verbindungen die erfaßte aktuelle maximal mögliche Datenrate überschreitet, Prüfen des Datenratenbedarfs derzeit bestehender Verbindungen, und wenn dieser die erfaßte aktuelle maximal mögliche Datenrate nicht mehr überschreitet, Konfigurieren der erfaßten aktuellen maximal möglichen Datenrate als maximal zulässige Datenrate der Netzschnittstelleneinheit (NIU).

3. Verfahren zum automatischen Konfigurieren einer Teilnehmereinrichtung (En) nach Anspruch 1 oder 2, gekennzeichnet durch den zusätzlichen Verfahrensschritt:

    falls der Datenratenbedarf derzeit bestehender Verbindungen die erfaßte aktuelle maximal mögliche Datenrate überschreitet, Abgeben einer Meldung an mindestens eine Endgeräteapplikationen der Teilnehmereinrichtung, für die derzeit bestehende Verbindungen aufgebaut sind, mit einem Hinweis, daß die Übertragungsqualität nicht gewährleistet ist.

4. Verfahren zum automatischen Konfigurieren einer Teilnehmereinrichtung (En) nach einem der vorhergehenden Ansprüche, gekennzeichnet durch den zusätzlichen Verfahrensschritt:

    Abgeben einer Meldung an die Anschlußeinheit (AFRA-NT) mit der neuen maximal zulässige Datenrate der Netzschnittstelleneinheit (NIU), falls die erfaßte aktuelle maximal mögliche Datenrate als maximal zulässige Datenrate der Netzschnittstelleneinheit (NIU) konfiguriert wird.

5. Verfahren zum automatischen Konfigurieren einer Teilnehmereinrichtung (En) nach einem der vorhergehenden Ansprüche, gekennzeichnet durch den zusätzlichen Verfahrensschritt:

    Vergleichen der erfaßten aktuellen maximal möglichen Datenrate mit einem in der Teilnehmereinrichtung (En) gespeicherten Wert der von der Anschlußeinheit (AFRA-NT) unterstützten maximalen Datenrate; und Ersetzen des Wertes der erfaßten aktuellen maximal möglichen Datenrate durch den Wert der von der Anschlußeinheit (AFRA-NT) unterstützten maximalen Datenrate, falls dieser kleiner ist als der Wert der erfaßten aktuellen maximal möglichen Datenrate.

6. Verfahren zum automatischen Konfigurieren einer Teilnehmereinrichtung (En) nach einem der vorhergehenden Ansprüche, dadurch gekennzeichnet, daß zum Erfassen der aktuellen ,maximal möglichen Datenrate zwischen Netzschnittstelleneinheit (NIU) und Anschlußeinheit (AFRA-NT) die Netzschnittstelleneinheit (NIU) und die Anschlußeinheit (AFRA-NT) mit Hilfe eines Informationsaustauschs zwischen diesen Einheiten die Übertragungseigenschaften anhand der Fehlerrate messen und die Anschlußeinheit (AFRA-NT) daraufhin in Form einer Meldung (Capacity_Modification_Requ) die aktuell gemessene maximale Übertragungsrate als Parameter zur Netzschnittstelleneinheit (NIU) übermittelt.

7. Verfahren zum automatischen Konfigurieren einer Teilnehmereinrichtung (En) nach einem der vorhergehenden Ansprüche, dadurch gekennzeichnet, daß zum Veranlassen des Erfassens der aktuellen ,maximal möglichen Datenrate zwischen Netzschnittstelleneinheit (NIU) und Anschlußeinheit (AFRA-NT) die Netzschnittstelleneinheit (NIU) eine Anfragemeldung (Max_Capacity_Requ) zur Anschlußeinheit (AFRA-NT) übermittelt.

8. Verfahren zum automatischen Konfigurieren einer Teilnehmereinrichtung (En) nach einem der vorhergehenden Ansprüche, dadurch gekennzeichnet, daß zwischen Netzschnittstelleneinheit (NIU) und Anschlußeinheit ein Übertragungssystem mit mehreren Nutzkanälen vorgesehen ist und daß die Werte der Datenraten jeweils einer Anzahl solcher Nutzkanäle entsprechen.

9. Teilnehmereinrichtung (En) mit Datenverarbeitungssystem einschließlich einer Verarbeitungseinheit, einer Speichereinheit und einem Systembus, um eine Endgeräteapplikation zu realisieren, und mit einer Netzschnittstelleneinheit (NIU) zum Anpassen des Systembusses an eine Anschlußeinheit (AFRA-NT) eines Digitalnetzes, deren Datenrate abhängig von den tatsächlichen Übertragungsbedingungen adaptiv einstellbar ist, wobei die Teilnehmereinrichtung (En) Mittel zum Erfassen der aktuellen, maximal möglichen Datenrate zwischen Netzschnittstelleneinheit (NIU) und Digitalnetzanschlußeinheit (AFRA-NT) hat, Mittel zum Speichern eines Wertes der maximal möglichen Datenrate, Mittel zum Vergleichen des gespeicherten Wertes der maximal möglichen Datenrate mit dem Wert der erfaßten aktuellen, maximal möglichen Datenrate, Mittel zum Konfigurieren einer maximal zulässigen Datenrate der Netzschnittstelleneinheit (NIU) und Mittel zum Abweisen eines Verbindungsaufbauwunsches der Endgeräteapplikation, falls der Datenratenbedarf dieser aufzubauenden Verbindung die maximal zulässige Datenrate überschreitet.

# FIG 1

EP 0 901 300 A1

EP 0 901 300 A1

**FIG 2**

Applikationen

Software

CAPI+

Betriebssystem und systemnahe Software

CAPI+

NIU          Prozessor          weitere
                                Baugruppen

Hardware

S2M

# FIG 3

NIU ........................................................ AFRA/NT

Einschalten

Max_Capacity_req.

Messen der
Strecke

Max_Capacity_ack ($n_{akt}$)

a) Speichern der
Leistungskapazität $n_{akt}$

Änderung der
Bitfehlerrate

Capacity_Modification_req. ($n_{akt}$)

Bewertung
der Information

Capacity_Modification_ack (# der freigegebenen B-Kanäle)

Speichern der neuen
modifizierten
b) Leistungskapazität $n_{akt}$

optional

**FIG 4**

Applikation  NIU  AFRA-NT

Line_Status_req. ($X_{alt}$)

Max_Capacity_req.

Max_Capacity_ind.

Line_Status_ack ($n_{akt}$, $n_{nutz}$)

# EP 0 901 300 A1

**Europäisches Patentamt**

## EUROPÄISCHER RECHERCHENBERICHT

Nummer der Anmeldung

EP 97 11 5554

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE 43 43 982 C (SIEMENS AG) <br> * das ganze Dokument * <br> --- | 1,4-6,9 | H04Q11/04 |
| A | HANRATTY J M ET AL: "AN EVALUATION OF ISDN VIA ACTS IN SUPPORT OF ARMY WIDE AREA INFORMATION SERVICES" <br> MILCOM '93, "COMMUNICATIONS ON THE MOVE", Bd. 3 OF 3, 11. - 14.Oktober 1993, BEDFORD, MA, <br> Seiten 988-992, XP000410900 <br> * Seite 991, rechte Spalte, Zeile 28-44 * <br> --- | 1,2,4,5,8,9 | |
| A | EP 0 039 191 A (KEARNEY & TRECKER CORPORATION) <br> * Zusammenfassung * <br> * Seite 1, Zeile 14 - Seite 2, Zeile 22 * <br> * Abbildung 1 * <br> --- | 1,4-6,9 | |
| A | US 5 305 318 A (OZEKI S ET AL) <br> * Zusammenfassung * <br> * Spalte 7, Zeile 21 - Spalte 8, Zeile 19 * <br> * Abbildung 6 * <br> --- | 1,7,9 | |
| A | US 5 317 415 A (KINAMI H ET AL) <br><br> * Zusammenfassung * <br> * Abbildung 1 * <br> ----- | 1,2,4,5,9 | |

**RECHERCHIERTE SACHGEBIETE (Int.Cl.6)**

H04Q

Der vorliegende Recherchenbericht wurde für alle Patentansprüche erstellt

| Recherchenort | Abschlußdatum der Recherche | Prüfer |
|---|---|---|
| DEN HAAG | 27.Januar 1998 | Gijsels, W |

EPO FORM 1503 03.82 (P04C03)